# EUROPÄISCHE PATENTSCHRIFT

(11) **EP 4 163 035 B1**
(45) Veröffentlichungstag und Bekanntmachung des Hinweises auf die Patenterteilung: **12.06.2024**
(21) Anmeldenummer: 22197440.5
(22) Anmeldetag: 23.09.2022
(51) Int. Cl.: B23B 31/30

(54) **ZUGVORRICHTUNG FÜR EIN SPANNMITTEL UND DAMIT AUSGESTATTETES SPANNMITTEL**
PULLING DEVICE FOR A CLAMPING DEVICE AND CLAMPING DEVICE EQUIPPED THEREWITH
DISPOSITIF DE TRACTION POUR MOYEN DE SERRAGE ET MOYEN DE SERRAGE ÉQUIPÉ DE CELUI-CI

(30) Priorität: 07.10.2021 CH 0703562021
(43) Veröffentlichungstag der Anmeldung: 12.04.2023
(73) Patentinhaber: Reishauer AG, 8304 Wallisellen (CH)
(72) Erfinder: ZIMMERMANN, Roman, 5312 Döttingen (CH); GEHRING, Benjamin, 8192 Glattfelden (CH); SEMSEDINI, Saip, 5212 Hausen (CH); STÄUBLI, Dominik Michael, 8050 Zürich (CH)
(74) Vertreter: Detken, Andreas

(56) Entgegenhaltungen:
- EP-A2- 1 027 947
- WO-A1-2016/207218
- DE-A1-102007 009 993

## Beschreibung

### TECHNISCHES GEBIET

Die vorliegende Erfindung betrifft eine Zugvorrichtung zur Betätigung eines Spannmittels sowie ein damit ausgestattetes Spannmittel. Die EP 1 027 947 A2 offenbart eine Zugvorrichtung nach dem Oberbegriff des Anspruchs 1.

### STAND DER TECHNIK

In Werkzeugmaschinen müssen häufig rotierende Teile, insbesondere Werkstücke und Werkzeuge, aufgespannt werden. Dazu dienen Spannmittel. Ein Spannmittel weist eine Spannmittelbasis auf, die eine Schnittstelle zu einer Maschinenstruktur bildet. Bei der Maschinenstruktur kann es sich insbesondere um eine Werkstück- oder Werkzeugspindel oder um eine Basiseinheit, die selbst auf einer solchen Spindel montiert ist, handeln. Ein Spannmittel weist des Weiteren ein Spannelement zur Verbindung mit dem aufzuspannenden Teil, z.B. einem Werkstück oder Werkzeug, auf.

Man unterscheidet insbesondere hydraulische Spannelemente und mechanische Spannelemente. Mechanische Spannelemente werden häufig durch eine vom Spannelement weg gerichtete axiale Zugbewegung betätigt, um das am Spannelement aufgespannte Teil vom Spannelement zu spannen oder zu lösen. Es ist dann eine Vorrichtung erforderlich, mit dem diese Zugbewegung erzeugt werden kann.

Aus dem Stand der Technik ist es bekannt, zu diesem Zweck in der Spannmittelbasis einen auf Zug wirkenden Hydraulikzylinder mit einem darin hydraulisch bewegbaren Zugkolben vorzusehen. Unter dem Druck eines Hydraulikmediums führt der Zugkolben eine vom Spannelement weg gerichtete axiale Zugbewegung aus. Eine Zugstange überträgt die Zugbewegung auf das Spannelement. Die Rückstellung des Zugkolbens in seine Ausgangsstellung erfolgt durch mehrere Rückstellfedern, die im Hydraulikzylinder angeordnet sind und auf den Zugkolben von der dem Hydraulikmedium entgegengesetzten Seite her einwirken. Der Hydraulikdruck wird dem Spannmittel dabei von einer externen Hydraulikpumpe durch eine Schnittstelle hindurch zugeführt. Ein derartiges Spannmittel wird von der Reishauer AG mit der Bezeichnung "DME" angeboten und ist in der Broschüre "REISHAUER Clamping Systems mechanically expanding", heruntergeladen von www.reishauer.com am 20.09.2021, genannt.

Bei einer Funktionsstörung des Zugkolbens muss bei Spannmitteln der genannten Art die Spannmittelbasis demontiert werden. Die Spannmittelbasis ist für die Präzision des Spannmittels (insbesondere für Rundlauf und Planlauf) essenziell. Nach dem Wiederzusammenbau des Spannmittels muss daher die Spannmittelbasis meist neu geschliffen werden.

An Spannmitteln der genannten Art ist zudem nachteilig, dass der Hydraulikzylinder relativ viel Platz beansprucht. Dies liegt in erster Linie daran, dass der zur Verfügung stehende externe Hydraulikdruck systembedingt begrenzt ist. Um mit dem zur Verfügung stehenden Druck eine genügend grosse Spannkraft zu erzeugen, muss daher die Querschnittsfläche des Zugkolbens verhältnismässig gross sein, was zu einem hohen Platzbedarf für den Hydraulikzylinder führt.

Ein weiterer Nachteil von Spannmitteln der genannten Art ist es, dass die Rückstellkraft, die durch die Rückstellfedern erzeugt wird, nicht verändert werden kann. Wenn die Rückstellkraft z.B. vergrössert werden soll, muss das Spannmittel demontiert werden, um stärkere Rückstellfedern einzubauen, was wiederum meist eine Nachbearbeitung der Spannmittelbasis bedingt.

Herkömmliche Spannmittel der vorstehend genannten Art sind insofern unflexibel, wenig wartungsfreundlich und benötigen viel Platz.

### DARSTELLUNG DER ERFINDUNG

Es ist eine Aufgabe der vorliegenden Erfindung, eine Zugvorrichtung zur Erzeugung einer Zugbewegung in einem Spannmittel anzugeben, wobei dieser Mechanismus eine einfache Bedienung und Wartung ermöglichen soll und kompakt realisierbar sein soll.

Diese Aufgabe wird durch eine Zugvorrichtung gemäss Anspruch 1 gelöst. Weitere Ausführungsformen sind in den abhängigen Ansprüchen angegeben.

Es wird eine Zugvorrichtung zur Erzeugung einer Zugbewegung in einem Spannmittel angegeben, aufweisend:
einen auf Zug wirkenden hydraulischen Arbeitszylinder mit einem entlang einer Längsachse verschiebbaren Zugkolben;
eine mit dem Zugkolben verbundene Zugstange;
einen auf Druck wirkenden hydraulischen Pumpzylinder mit einem darin verschiebbaren Pumpkolben; und
eine Fluidverbindung zwischen dem Pumpzylinder und dem Arbeitszylinder, so dass ein Hydraulikfluid zwischen dem Pumpzylinder und dem Arbeitszylinder austauschbar ist.

Die Zugvorrichtung ist derart ausgebildet, dass eine Bewegung des Pumpkolbens in eine Druckrichtung entlang der Längsachse bewirkt, dass das Hydraulikfluid vom Pumpzylinder in den Arbeitszylinder strömt und dort eine Zugbewegung des Zugkolbens und der damit verbundenen Zugstange in eine Zugrichtung entlang der Längsachse bewirkt. Dabei ist die Zugrichtung der Druckrichtung entgegengesetzt. Der Pumpzylinder und der Arbeitszylinder sind koaxial zueinander in einem gemeinsamen Gehäuse angeordnet.

Die Erfindung nutzt den Umstand, dass im Bereich des Spannmittels häufig schon ein Druckkolben zur Erzeugung einer Druckbewegung entlang der Druckrichtung vorhanden ist. Beispielsweise kann das Spannmittel auf einer Basiseinheit montiert sein, die wiederum auf einer Werkstück- oder Werkzeugspindel einer Werkzeugmaschine angebracht ist, und die Basiseinheit kann den genannten Druckkolben aufweisen. Die Zugvorrichtung wandelt nun die Druckbewegung entlang der Druckrichtung in eine Zugbewegung entlang der Zugrichtung, die der Druckrichtung entgegengesetzt ist, um und ermöglicht so die Betätigung des Spannmittels. Indem der Pumpzylinder und der Arbeitszylinder koaxial zueinander in einem gemeinsamen Gehäuse angeordnet sind, resultiert eine einfach auswechselbare, kompakte Einheit, die für ihren Betrieb keine Hydraulikanschlüsse benötigt und die sich zu Wartungszwecken einfach aus dem Spannmittel entfernen lässt, ohne komplexe Demontagearbeiten durchführen zu müssen.

Durch eine geeignete Wahl der Querschnittsflächen des Pumpkolbens und des Zugkolbens kann sehr einfach eine hydraulische Druckübersetzung und gegebenenfalls auch eine hydraulische Kraftübersetzung realisiert werden. Insbesondere kann die Querschnittsfläche des Pumpkolbens kleiner gewählt werden als die Querschnittsfläche des externen Druckkolbens, mit dem die Druckbewegung auf den Pumpkolben erzeugt wird. Dadurch kann im Pumpzylinder ein hydraulischer Druck erzeugt werden, der wesentlich höher ist als der externe hydraulische Druck, der auf den externen Druckkolben einwirkt. Aufgrund dieser hydraulischen Druckübersetzung kann die Zugvorrichtung wesentlich kompakter gestaltet werden, als wenn der Zugkolben mit einem externen Hydraulikdruck betrieben würde. Zum anderen kann die Querschnittsfläche des Pumpkolbens kleiner gewählt werden als die Querschnittsfläche des Zugkolbens. Dadurch kann mit dem hydraulischen Druck, der vom Pumpzylinder erzeugt wird, am Zugkolben eine Zugkraft erzeugt werden, die höher ist als die auf den Pumpkolben einwirkende externe Druckkraft (hydraulische Kraftübersetzung). Insgesamt kann mit sehr geringem Platzbedarf eine hohe Zugkraft erzielt werden.

Vorzugsweise ist der Arbeitszylinder ringförmig und umgibt den Pumpzylinder radial. Dadurch entsteht eine besonders kompakte Anordnung mit geringem Längenbedarf entlang der Längsachse.

Dabei kann die folgende, besonders leicht zu realisierende konstruktive Lösung gewählt werden: Das Gehäuse weist eine durchgehende zentrale Bohrung entlang der Längsachse auf. In der zentralen Bohrung ist ein Einsatz aufgenommen. Der Zugkolben ist ringförmig ausgebildet und in einem Ringraum zwischen dem Einsatz und dem Gehäuse verschiebbar angeordnet. Der Ringraum bildet somit den Arbeitszylinder. Die Zugstange erstreckt sich durch die zentrale Bohrung des Gehäuses hindurch nach aussen. Der Pumpkolben ist in einer zentralen Bohrung des Einsatzes verschiebbar angeordnet. Die zentrale Bohrung des Einsatzes bildet somit den Pumpzylinder. Die zentrale Bohrung des Einsatzes ist durch eine oder mehrere laterale Öffnungen im Einsatz hindurch fluidisch mit dem Ringraum zwischen dem Einsatz und dem Gehäuse verbunden.

Bevorzugt weist die Zugvorrichtung ausserdem eine Rückstellfeder auf, um den Zugkolben in eine Ausgangsstellung zurückzustellen. Die Rückstellfeder ist vorzugsweise als Druckfeder ausgebildet und derart axial zwischen einem gehäusefest angeordneten Auflageelement und einem mit der Zugstange verbundenen Gegendruckelement angeordnet, dass die Zugbewegung der Zugstange eine Kompression der Rückstellfeder bewirkt. Das Auflageelement kann dabei durch einen stirnseitig ausgerichteten Wandbereich des Gehäuses oder durch ein separates Element gebildet sein. Die Rückstellfeder ist insbesondere nicht im Arbeitszylinder angeordnet. Vorzugsweise ist sie ausserhalb des Gehäuses angeordnet, um eine leichte Zugänglichkeit zu gewährleisten.

Die axiale Position des Gegendruckelements an der Zugstange ist vorzugsweise verstellbar, um die Vorspannkraft der Rückstellfeder zu verändern. Dazu kann die Zugstange ein Aussengewinde aufweisen, und das Gegendruckelement kann ein zum Aussengewinde komplementäres Innengewinde aufweisen, so dass die axiale Position des Gegendruckelements an der Zugstange durch eine einfache Schraubverbindung veränderbar ist. Anders ausgedrückt, kann also das Gegendruckelement als Mutter ausgebildet sein oder eine Mutter umfassen. Stattdessen kann die axiale Verstellbarkeit aber auch auf andere Weise, z.B. durch einen Sicherungsring oder Klemmen, erreicht werden.

In vorteilhaften Ausführungsformen ist die Rückstellfeder als Elastomerfeder ausgebildet, also aus einem elastomeren Kunststoffmaterial gefertigt. Sie kann aber auch anders, z.B. als Schraubenfeder oder Tellerfeder, ausgebildet sein.

Eine besondere einfache Ausgestaltung ergibt sich, wenn die Rückstellfeder die Zugstange radial umgibt. Es ist aber auch denkbar, die Rückstellfeder lateral versetzt zur Zugstange anzuordnen. Insbesondere in diesem Fall ist es auch denkbar, zwei oder mehr Rückstellfedern vorzusehen, die in Umfangsrichtung verteilt um die Zugstange herum angeordnet sind. Es ist auch denkbar, an der Zugvorrichtung selbst auf eine Rückstellfeder zu verzichten und die Rückstellung auf andere Weise zu gewährleisten, z.B. indem eine Rückstellfeder an einer anderen Stelle im Spannmittel vorgesehen wird.

Die Erfindung stellt auch ein Spannmittel zur Verfügung, welches aufweist:
einen ein- oder mehrteiligen Basiskörper, der eine Spannmittelbasis zur Verbindung mit einem Maschinenteil bildet;
ein auf Zug betätigbares Spannelement zur Herstellung einer Spannverbindung mit einem aufzuspannenden Objekt; und
eine Zugvorrichtung der vorstehend genannten Art,

wobei die Zugvorrichtung lösbar im Basiskörper angeordnet ist, und
wobei das Spannelement derart mit der Zugstange der Zugvorrichtung lösbar verbunden ist, dass das Spannelement durch die Zugbewegung der Zugstange betätigbar ist.

Dabei ist die Zugvorrichtung bevorzugt derart im Basiskörper aufgenommen, dass sie vollständig aus dem Basiskörper entnehmbar ist, ohne den Basiskörper zu demontieren, insbesondere, ohne die Spannmittelbasis vom Spannelement zu entfernen.

Insbesondere kann das Spannmittel dazu ein Sicherungselement aufweisen, das eine lösbare Verbindung zwischen dem Basiskörper und der Zugvorrichtung bewirkt, wobei die Zugvorrichtung in einem fixierten Zustand des Sicherungselements am Basiskörper fixiert ist und in einem gelösten Zustand des Sicherungselements aus dem Basiskörper entnehmbar ist. Bei dem Sicherungselement kann es sich beispielsweise um eine oder mehrere radiale Schrauben oder einen Sicherungsring handeln.

Der Basiskörper kann eine Bohrung aufweisen, und die Zugvorrichtung kann dann derart in der Bohrung aufgenommen sein, dass sie entlang ihrer Längsachse vollständig aus dem Basiskörper entnehmbar ist, ohne den Basiskörper zu demontieren. In bevorzugten Ausführungsformen handelt es sich bei der Bohrung um eine zentrale axiale Bohrung entlang einer zentralen Längsachse des Spannmittels. Die Bohrung kann aber auch z.B. schräg oder sogar quer zur Längsachse des Spannmittels verlaufen. Wenn die Längsachse der Zugvorrichtung nicht mit der Längsachse des Spannmittels übereinstimmt, kann vorgesehen sein, dass die Zugbewegung auf eine geeignete Weise umgelenkt wird, wie das an sich aus dem Stand der Technik bekannt ist.

Falls die Zugvorrichtung nicht schon selbst eine Rückstellfeder aufweist, um den Zugkolben der Zugvorrichtung in seine Ausgangsstellung zurückzustellen, kann eine solche Rückstellfeder an einer anderen Stelle im Spannmittel vorgesehen sein. Es ist auch denkbar, eine erste Rückstellfeder in der Zugvorrichtung und eine zweite Rückstellfeder an einer anderen Stelle im Spannmittel vorzusehen.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Zugvorrichtung gemäss einem Ausführungsbeispiel der Erfindung in einem zentralen Längsschnitt; und
- Fig. 2: ein Spannmittel mit einer Zugvorrichtung nach Fig. 1 in eingebautem Zustand.

### BESCHREIBUNG BEVORZUGTER AUSFÜHRUNGSFORMEN

### Beispiel einer Zugvorrichtung

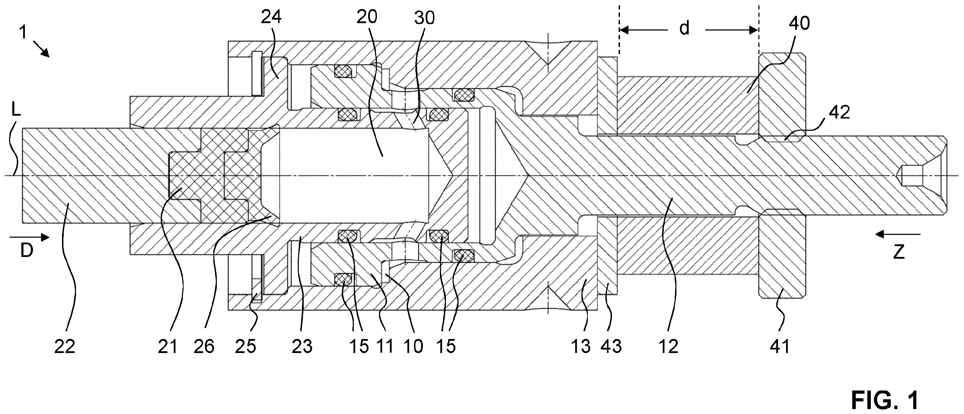

In der Fig. 1 ist eine Zugvorrichtung 1 gemäss einem Ausführungsbeispiel der Erfindung illustriert.

Richtungsbezeichnungen werden im Folgenden wie folgt verwendet: Die Zugvorrichtung 1 definiert eine zentrale Längsachse L. Eine Druckrichtung D weist in der Fig. 1 entlang der Längsachse L nach rechts. Mit einer Richtung "nach rechts" ist im Folgenden also die Druckrichtung D gemeint. Eine Zugrichtung Z ist der Druckrichtung D entgegengesetzt und weist dementsprechend in der Fig. 1 nach links. Mit einer Richtung "nach links" ist im Folgenden somit die Zugrichtung Z gemeint. Eine wesentliche Funktion der Zugvorrichtung 1 ist es, eine Druckbewegung in die Druckrichtung D (d.h. nach rechts) in eine Zugbewegung in die Zugrichtung Z (d.h. nach links) umzuwandeln.

Die Zugvorrichtung 1 weist ein aussenseitig zylindrisches Gehäuse 13 auf. In dem Gehäuse 13 ist eine durchgehende zentrale Bohrung entlang der Längsachse L ausgebildet. Die Bohrung verjüngt sich von links nach rechts in mehreren Stufen. In die Bohrung ist von der linken Seite her ein Einsatz 23 eingeschoben. Mit einem radial vorstehenden Ringflansch 24 liegt der Einsatz 23 im Bereich einer der Stufen der Bohrung stirnseitig an einem innenseitigen Schulterbereich des Gehäuses 13 an. Dadurch ist der Einsatz 23 daran gehindert, axial weiter nach rechts in das Gehäuse 13 eingeschoben zu werden. Mit einem Sicherungsring 25, der in eine innenseitige Ringnut im Gehäuse 13 eingreift, ist der Einsatz 23 daran gehindert, sich nach links aus der Bohrung hinaus zu bewegen. Insgesamt ist der Einsatz 23 dadurch axial und radial im Gehäuse 13 fixiert.

Zwischen dem Einsatz 23 und dem Gehäuse 13 befindet sich ein Ringraum, in dem ein ringförmiger Zugkolben 11 axial verschiebbar angeordnet ist. Mit dem Zugkolben 11 ist einstückig eine Zugstange 12 verbunden. Die Zugstange 12 ist im Bereich des Ringraums im Querschnitt ebenfalls ringförmig. Sie erstreckt sich vom Zugkolben 11 ausgehend durch den Ringraum und durch die zentrale Bohrung des Gehäuses 13 hindurch zur rechten Seite hin nach aussen. Der Zugkolben 11 und der ringförmige Bereich der Zugstange 12 sind mit Dichtungsringen 15 sowohl gegenüber dem Gehäuse 13 als auch gegenüber dem Einsatz 23 umlaufend gedichtet. Der Einsatz 23, das Gehäuse 13 und der Zugkolben 11 begrenzen gemeinsam einen ringförmigen Hohlraum, dessen Volumen von der axialen Stellung des Zugkolbens 11 abhängt. Dieser Hohlraum kann mit einem Hydraulikfluid beaufschlagt werden, um den Zugkolben 11 nach links in die Zugrichtung Z zu drücken. Das Gehäuse 13, der Einsatz 23 und der dazwischen verschiebbar angeordnete Zugkolben 11 bilden dadurch einen auf Zug wirkenden Arbeitszylinder 10.

Der Einsatz 23 weist eine nach links offene, zentrale zylindrische Bohrung entlang der Längsachse L auf. In der Bohrung ist ein Pumpkolben 21 mit einer umlaufenden Kolbendichtung 26 verschiebbar angeordnet. Der Einsatz 23 und der darin verschiebbare Pumpkolben 21 begrenzen gemeinsam einen zylindrischen Hohlraum, dessen Volumen von der axialen Stellung des Pumpkolbens 21 abhängt. Durch eine Bewegung des Pumpkolbens 21 nach rechts in die Druckrichtung D kann Hydraulikfluid aus dem Hohlraum gepresst werden. Der Einsatz 23 und der darin verschiebbar angeordnete Pumpkolben 21 bilden dadurch einen auf Druck wirkenden Pumpzylinder 20. Zur Betätigung des Pumpkolbens 21 dient eine Kolbenstange 22.

Der Pumpzylinder 20 und der Arbeitszylinder 10 sind durch mehrere laterale Bohrungen im Einsatz 23 und laterale Durchbrüche im ringförmigen Bereich der Zugstange 12 fluidisch miteinander verbunden. Dadurch besteht eine Fluidverbindung 30 zwischen dem Pumpzylinder 20 und dem Arbeitszylinder 10.

Wenn nun die Kolbenstange 22 nach rechts in die Druckrichtung D bewegt wird, wird Hydraulikfluid vom Pumpzylinder 20 in den Arbeitszylinder 10 gepresst und bewirkt dort eine Bewegung der Zugstange 12 nach links in die Zugrichtung Z. Insgesamt wird so eine Druckbewegung der Kolbenstange 22 in die Druckrichtung D in eine Zugbewegung der Zugstange 12 in die Zugrichtung Z umgewandelt.

In der Fig. 1 ist die Ausgangsstellung oder Ruhestellung des Zugkolbens 11 dargestellt. Die Zugstange 12 ist an einer weiteren Bewegung nach rechts, entgegen der Zugrichtung, gehindert. Um nach einer Betätigung der Zugvorrichtung 1 eine Rückstellung der Zugstange 12 in diese Ausgangsstellung zu bewirken, weist die Zugvorrichtung 1 eine Rückstellfeder 40 auf. Im vorliegenden Ausführungsbeispiel ist diese Rückstellfeder 40 als ringförmige Elastomerfeder ausgebildet und umgibt die Zugstange 12.

Um die Rückstellfeder 40 bei der Zugbewegung der Zugstange 12 zu komprimieren, ist mit der Zugstange ein Gegendruckelement 41 verbunden. Die Rückstellfeder 40 ist axial zwischen dem Gegendruckelement 41 und einem gehäusefest angeordneten, ringförmigen Auflageelement 43 angeordnet. In der Ausgangsstellung des Zugkolbens 11 ist die Rückstellfeder 40 elastisch vorgespannt. Die Vorspannkraft kann dabei verändert werden, indem der Abstand d ("Einstellmass") zwischen dem Auflageelement 43 und dem Gegendruckelement 41 verändert wird. Zusätzlich kann die Vorspannkraft durch die axiale Dicke des Auflageelements 43 verändert werden. Das Auflageelement 43 kann auch entfallen; in diesem Fall übernimmt ein rechtsseitiger äusserer Stirnwandbereich des Gehäuses 13 die Funktion des Auflageelements.

Um das Einstellmass d einfach verändern zu können, ist das Gegendruckelement 41 im vorliegenden Ausführungsbeispiel als Gewindemutter ausgeführt, die mit ihrem Innengewinde 42 in ein Aussengewinde der Zugstange 12 eingreift. Durch eine Schraubbewegung der Gewindemutter kann das Einstellmass d sehr einfach und präzise eingestellt werden.

Um eine einfache Zugänglichkeit der Rückstellfeder 40 zu gewährleisten, ist diese ausserhalb des Gehäuses 13 angeordnet. Das Gehäuse 13 kann aber auch zumindest einen Teil der Rückstellfeder 40 radial umgeben, solange gewährleistet ist, dass das Gegendruckelement 41 leicht zugänglich bleibt.

### Einbau in ein Spannmittel

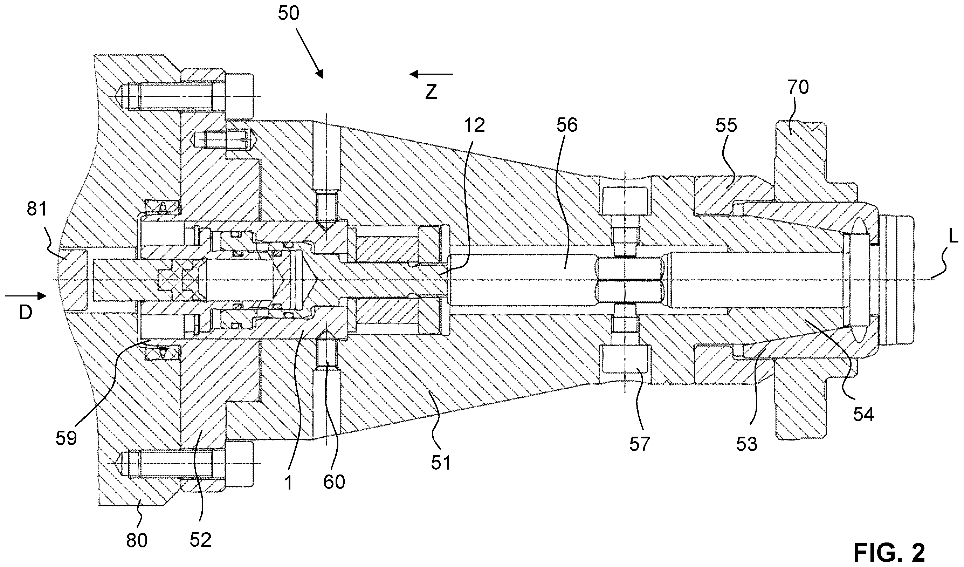

Die Fig. 2 zeigt beispielhaft ein Spannmittel 50, in dem eine Zugvorrichtung 1 gemäss Fig. 1 eingebaut ist.

Das Spannmittel ist zur Befestigung an einer nur schematisch angedeuteten Basiseinheit 80 ausgebildet, in der sich ein Druckkolben mit Kolbenstange 81 zur Erzeugung einer in die Druckrichtung D wirkenden Druckkraft befindet. Das Spannmittel 50 ist im vorliegenden Beispiel dazu ausgebildet, ein rotationssymmetrisches Werkstück 70 aufzuspannen. Beim Werkstück 70 kann es sich z.B. um ein Stirnrad handeln. Dementsprechend kann die Basiseinheit 80 auf einer Werkstückspindel einer Werkzeugmaschine angebracht sein.

Das Spannmittel 50 weist einen Basiskörper 51 auf, der im vorliegenden Beispiel zweiteilig aufgebaut ist. Ein in Fig. 2 links angeordneter Teil des Basiskörpers 51 bildet dabei eine Spannmittelbasis 52. Die Spannmittelbasis 52 dient zur Verbindung des Spannmittels mit der Basiseinheit 80. Sie weist dazu eine plane Stirnfläche auf, mit der sie auf einer Gegenfläche der Basiseinheit 80 aufliegt. Ein Zentrierring 59 erstreckt sich entlang der Längsachse L in eine zentrale Ausnehmung der Basiseinheit 80 hinein. Auf diese Weise werden Rund- und Planlauf des Spannmittels 50 sichergestellt. Zylinderschrauben dienen zur Fixierung des Spannmittels 50 auf der Basiseinheit 80.

Das Spannmittel weist des Weiteren ein Spannelement 53 in Form einer Spannzange auf. Die Spannzange ist mit einer Betätigungsstange 56 verbunden, die axial verschiebbar im Basiskörper 51 angeordnet ist und sich entlang der zentralen Längsachse L vom Spannelement 53 aus in die Zugrichtung Z erstreckt. Drehsicherungsschrauben 57 greifen in Längsnuten der Betätigungsstange 56 ein und sichern diese so gegen Verdrehen. Die Betätigungsstange 56 besitzt an ihrem freien Ende ein Innengewinde, das auf das Aussengewinde der Zugstange 12 der Zugvorrichtung 1 aufgeschraubt ist. Dadurch besteht eine axial feste Verbindung zwischen der Zugstange 12 und der Betätigungsstange 56. Die Schraubverbindung lässt sich durch Drehen an der Betätigungsstange justieren oder lösen, nachdem die Drehsicherungsschrauben 57 gelöst wurden.

Zum Aufspannen eines Werkstücks 70 wird dieses axial auf die Spannzange aufgeschoben, bis es an einem Anlagering 55 anliegt. Durch Zug an der Betätigungsstange 56 wird die Spannzange auf einen konischen Grunddorn 54, der am Ende des Basiskörpers 51 ausgebildet ist, gezogen und dadurch aufgeweitet. Auf diese Weise wird eine Spannverbindung mit dem Werkstück 70 hergestellt. Durch eine entgegengesetzte Bewegung der Betätigungsstange 56 wird die Spannverbindung wieder gelöst.

Zur Erzeugung der Zugbewegung der Betätigungsstange 56 dient die Zugvorrichtung 1. Um die Zugvorrichtung 1 aufzunehmen, ist im Basiskörper 51 eine nach links, d.h. in Zugrichtung, offene zentrale Bohrung entlang der zentralen Längsachse L ausgebildet. Die Bohrung verjüngt sich stufenweise von links nach rechts. In die Bohrung ist vom linken Ende her die Zugvorrichtung 1 eingeschoben. Mit ihrem Gehäuse liegt sie an im Bereich einer der Stufen der Bohrung stirnseitig an einem ringförmigen Wandbereich des Basiskörpers 51 an und ist dadurch daran gehindert, weiter nach rechts in die Bohrung eingeschoben zu werden.

Über den Umfang des Basiskörpers verteilt sind mehrere Sicherungsschrauben 60 in radiale Bohrungen des Basiskörpers eingeschraubt. Die Sicherungsschrauben ragen in entsprechende Sacklöcher auf der Aussenseite des Gehäuses der Zugvorrichtung hinein und fixieren die Zugvorrichtung dadurch axial und radial im Basiskörper. Sie wirken insofern als Sicherungselemente zur lösbaren Verbindung zwischen dem Basiskörper 51 und der Zugvorrichtung 1.

Das Spannmittel 50 lässt sich nun dadurch betätigen, dass eine axiale Bewegung der Kolbenstange 81 in die Druckrichtung D erzeugt wird. Die Zugvorrichtung 1 wandelt diese Bewegung in eine Zugbewegung der Betätigungsstange 56 in die Zugrichtung Z um.

Die Zugvorrichtung 1 lässt sich als komplette Einheit vollständig aus dem Basiskörper 51 entnehmen. Dazu werden zunächst die Drehsicherungsschrauben 57 gelöst, und die Betätigungsstange 56 wird von der Zugstange 12 abgeschraubt. Nun werden die Sicherungsschrauben 60 gelöst. Die Zugvorrichtung 1 lässt sich nun vollständig aus der Bohrung des Basiskörpers 51 herausziehen.

Die Zugvorrichtung 1 bildet insofern eine in sich geschlossene, kompakte Einheit, die ähnlich zu einer Patrone lösbar im Basiskörper 51 aufgenommen ist und als Ganze vollständig aus dem Basiskörper entnommen werden kann, ohne den Basiskörper 51 zu demontieren, insbesondere, ohne die Spannmittelbasis 52 vom Rest des Basiskörpers 51 zu lösen. Dadurch kann die Zugvorrichtung 1 sehr einfach ausgetauscht oder gewartet werden. Indem die Federvorspannung der Rückstellfeder 40 durch eine einfache Schraubbewegung des Gegendruckelements 41 eingestellt werden kann, ist eine Anpassung der Federvorspannung an unterschiedliche Anforderungen leicht möglich.

### Abwandlungen

Die Erfindung ist nicht durch das vorstehend beschriebene Ausführungsbeispiel beschränkt, und es sind vielfache Abwandlungen möglich, ohne den Bereich der Erfindung, wie sie in den Ansprüchen definiert ist, zu verlassen.

Beispielsweise braucht die Rückstellfeder nicht konzentrisch um die Zugstange herum angeordnet zu sein, sondern kann auch versetzt zu dieser verlaufen. Insbesondere in diesem Fall können auch zwei oder mehr Rückstellfedern vorhanden sein, die beispielsweise über die Umfangsrichtung verteilt parallel zur Zugstange angeordnet sind. Die Rückstellfeder oder Rückstellfedern brauchen nicht notwendigerweise Teil der Zugvorrichtung 1 zu sein. Sie können auch an einer anderen Stelle im Spannmittel angeordnet sein. Beispielsweise kann eine Rückstellfeder die Betätigungsstange 56 umgeben.

Die Rückstellfeder braucht keine Elastomerfeder zu sein. Beispielsweise kann es sich auch um eine auf Druck wirkende Schraubenfeder oder Tellerfeder handeln.

Die Zugvorrichtung braucht nicht notwendigerweise zentral axial im Basiskörper des Spannmittels angeordnet sein. Sie kann beispielsweise auch schräg oder quer angeordnet sein.

Die Fixierung der Zugvorrichtung im Basiskörper kann auch auf eine andere Weise als durch radiale Schrauben erfolgen, beispielsweise durch einen Sicherungsring.

Die Verbindung der Betätigungsstange 52 mit der Zugstange 12 kann auch auf andere Weise als durch eine Gewindeverbindung erfolgen, z.B. durch Verstiften, Klemmen oder eine Bajonettverbindung.

Das Spannmittel kann nicht nur zum Aufspannen von Stirnrädern ausgebildet sein, sondern auch zum Aufspannen anderer aussen- oder innenverzahnter Werkstücke, Werkstücke ohne Verzahnung, Werkzeuge oder anderer Objekte. Bevorzugt handelt es sich um ein Objekt, das zumindest näherungsweise rotationssymmetrisch ist, und das Spannmittel ist zur Montage auf einer rotatorisch antreibbaren Spindel ausgebildet, um das Objekt in eine Drehung um die Längsachse zu versetzen. Falls das Spannmittel zum Aufspannen eines Werkzeugs ausgebildet ist, kann es sich beim Werkzeug insbesondere um ein Werkzeug zur Verzahnbearbeitung handeln, z.B. um ein Schleifwerkzeug wie eine Schleifschnecke oder eine Profilschleifscheibe.

### BEZUGSZEICHENLISTE

| | | | |
|---|---|---|---|
| 1 | Zugvorrichtung | 50 | Spannmittel |
| 10 | Arbeitszylinder | 51 | Basiskörper |
| 11 | Zugkolben | 52 | Spannmittelbasis |
| 12 | Zugstange | 53 | Spannelement (Spannzange) |
| 13 | Gehäuse | 54 | Grunddorn |
| 15 | Dichtungsring | 55 | Anlagering |
| 20 | Pumpzylinder | 56 | Betätigungsstange |
| 21 | Pumpkolben | 57 | Drehsicherungsschraube |
| 22 | Kolbenstange | 59 | Zentrierring |
| 23 | Einsatz | 60 | Sicherungsschraube |
| 24 | Ringflansch | 70 | Werkstück |
| 25 | Sicherungsring | 80 | Basiseinheit |
| 26 | Kolbendichtung | | |
| 30 | Fluidverbindung | L | Längsachse |
| 40 | Rückstellfeder | D | Druckrichtung |
| 41 | Gegendruckelement | Z | Zugrichtung |
| 42 | Innengewinde | d | Einstellmass |
| 43 | Auflagering | | |

## Patentansprüche

1. Zugvorrichtung (1) zur Erzeugung einer Zugbewegung in einem Spannmittel, aufweisend:
einen auf Zug wirkenden hydraulischen Arbeitszylinder (10) mit einem entlang einer Längsachse (L) verschiebbaren Zugkolben (11);
eine mit dem Zugkolben (11) verbundene Zugstange (12);
einen auf Druck wirkenden hydraulischen Pumpzylinder (20) mit einem darin verschiebbaren Pumpkolben (21); und
eine Fluidverbindung (30) zwischen dem Pumpzylinder (20) und dem Arbeitszylinder (10), so dass ein Hydraulikfluid zwischen dem Pumpzylinder (20) und dem Arbeitszylinder (10) austauschbar ist,
wobei der Pumpzylinder (20) und der Arbeitszylinder (10) koaxial zueinander in einem Gehäuse (13) der Zugvorrichtung (1) angeordnet sind,
**dadurch gekennzeichnet, dass** eine Bewegung des Pumpkolbens (21) in eine Druckrichtung (D) entlang der Längsachse (L) bewirkt, dass das Hydraulikfluid vom Pumpzylinder (10) in den Arbeitszylinder (20) strömt und dort eine Zugbewegung des Zugkolbens (11) und der damit verbundenen Zugstange (12) in eine der Druckrichtung (D) entgegengesetzte Zugrichtung (Z) entlang der Längsachse (L) bewirkt.

2. Zugvorrichtung (1) nach Anspruch 1, wobei der Arbeitszylinder (10) ringförmig ist und den Pumpzylinder (20) radial umgibt.

3. Zugvorrichtung (1) nach Anspruch 2,
wobei das Gehäuse (13) eine durchgehende zentrale Bohrung entlang der Längsachse (L) aufweist,
wobei die Zugvorrichtung (1) einen Einsatz (23) aufweist, der in der zentralen Bohrung des Gehäuses (13) aufgenommen ist,
wobei der Zugkolben (11) ringförmig ist und in einem den Arbeitszylinder (10) bildenden Ringraum zwischen dem Einsatz (23) und dem Gehäuse (13) verschiebbar angeordnet ist,
wobei sich die Zugstange (12) durch die zentrale Bohrung des Gehäuses (13) hindurch nach aussen erstreckt,
wobei der Pumpkolben (21) in einer den Pumpzylinder (20) bildenden zentralen Bohrung des Einsatzes (23) verschiebbar angeordnet ist, und
wobei die zentrale Bohrung des Einsatzes (20) durch eine oder mehrere laterale Öffnungen im Einsatz (23) hindurch fluidisch mit dem Ringraum zwischen dem Einsatz (23) und dem Gehäuse (13) verbunden ist.

4. Zugvorrichtung (1) nach einem der Ansprüche 1 bis 3, ausserdem aufweisend eine Rückstellfeder (40), um den Zugkolben (11) in eine Ausgangsstellung zurückzustellen,
wobei die Rückstellfeder (40) als Druckfeder ausgebildet ist und derart ausserhalb des Arbeitszylinders axial zwischen einem gehäusefest angeordneten Auflageelement (43) und einem mit der Zugstange (12) verbundenen Gegendruckelement (41) angeordnet ist, dass die Zugbewegung der Zugstange (12) eine Kompression der Rückstellfeder (40) bewirkt.

5. Zugvorrichtung (1) nach Anspruch 4, wobei die Rückstellfeder (40) ausserhalb des Gehäuses (13) angeordnet ist.

6. Zugvorrichtung (1) nach Anspruch 4 oder 5, wobei eine axiale Position des Gegendruckelements (41) an der Zugstange (12) verstellbar ist, um eine Vorspannkraft der Rückstellfeder (40) zu verändern.

7. Zugvorrichtung nach Anspruch 6,
wobei die Zugstange (12) ein Aussengewinde (13) aufweist, und
wobei das Gegendruckelement (41) ein zum Aussengewinde (13) komplementäres Innengewinde (42) aufweist,
so dass die axiale Position des Gegendruckelements (41) an der Zugstange (12) durch eine Schraubverbindung veränderbar ist.

8. Zugvorrichtung nach einem der Ansprüche 4 bis 7, wobei die Rückstellfeder (40) als Elastomerfeder ausgebildet ist.

9. Zugvorrichtung nach einem der Ansprüche 4 bis 8, wobei die Rückstellfeder (40) die Zugstange (12) radial umgibt.

10. Spannmittel (50), aufweisend:
einen ein- oder mehrteiligen Basiskörper (51), der eine Spannmittelbasis (52) zur Verbindung mit einem Maschinenteil (80) bildet;
ein auf Zug betätigbares Spannelement (53) zur Herstellung einer Spannverbindung mit einem aufzuspannenden Objekt (70); und
eine Zugvorrichtung (1) nach einem der Ansprüche 1 bis 9,
wobei die Zugvorrichtung (1) lösbar im Basiskörper (51) angeordnet ist, und
wobei das Spannelement (53) derart mit der Zugstange (12) der Zugvorrichtung (1) lösbar verbunden ist, dass das Spannelement (53) durch die Zugbewegung der Zugstange (12) betätigbar ist.

11. Spannmittel (50) nach Anspruch 10, wobei die Zugvorrichtung (1) derart im Basiskörper (51) aufgenommen ist, dass sie vollständig aus dem Basiskörper (51) entnehmbar ist, ohne den Basiskörper (51) zu demontieren.

12. Spannmittel nach Anspruch 11, aufweisend ein Sicherungselement (60), das eine lösbare Verbindung zwischen dem Basiskörper (51) und der Zugvorrichtung (1) bewirkt, wobei die Zugvorrichtung (1) in einem fixierten Zustand des Sicherungselements (60) am Basiskörper (51) fixiert ist und in einem gelösten Zustand des Sicherungselements (60) aus dem Basiskörper (51) entnehmbar ist.

13. Spannmittel (50) nach Anspruch 11 oder 12,
wobei der Basiskörper (51) eine zentrale axiale Bohrung entlang der Längsachse (L) aufweist, und
wobei die Zugvorrichtung (1) derart in der zentralen axialen Bohrung des Basiskörpers (51) aufgenommen ist, dass sie vollständig aus dem Basiskörper (51) entnehmbar ist, ohne den Basiskörper (51) zu demontieren.

14. Spannmittel (50) nach einem der Ansprüche 11 bis 13, wobei das Spannmittel (50) eine separat von der Zugvorrichtung (1) ausgebildete Rückstellfeder aufweist, um den Zugkolben (11) der Zugvorrichtung (1) in eine Ausgangsstellung zurückzustellen.

## Claims

1. A pulling device (1) for generating a pulling movement in a clamping device, comprising:
a pull-acting hydraulic working cylinder having a pull piston (10) displaceable along a longitudinal axis (L);
a pull rod (12) connected to the pull piston (11);
a push-acting hydraulic pump cylinder (20) having a pump piston (21) displaceable therein; and
a fluidic connection (30) between the pump cylinder (20) and the working cylinder (10) so that a hydraulic fluid is interchangeable between the pump cylinder (20) and the working cylinder (10),
wherein the pump cylinder (20) and the working cylinder (10) are arranged coaxially to each other in a housing (13) of the pulling device (1),
**characterized in that** a movement of the pump piston (21) in a pushing direction (D) along the longitudinal axis (L) causes the hydraulic fluid to flow from the pump cylinder (20) into the working cylinder (10) and there causes a pulling movement of the pull piston (11) and the pull rod (12) connected thereto in a pulling direction (Z) along the longitudinal axis (L), the pulling direction (Z) being opposite to the pushing direction (D).

2. The pulling device (1) according to claim 1, wherein the working cylinder (10) is annular and radially surrounds the pump cylinder (20).

3. The pulling device (1) according to claim 2,
wherein the housing (13) has a continuous central bore along the longitudinal axis (L),
wherein the pulling device (1) comprises an insert (23) received in the central bore of the housing (13),
wherein the pull piston (11) is annular and is displaceably arranged in an annular space between the insert (23) and the housing (13), the annular space forming the working cylinder (10),
wherein the pull rod (12) extends outwardly through the central bore of the housing (13),
wherein the pump piston (21) is displaceably arranged in a central bore of the insert (23), the central bore forming the pump cylinder (20), and
wherein the central bore of the insert (23) is fluidically connected to the annular space between the insert (23) and the housing (13) through one or more lateral openings in the insert (23).

4. The pulling device (1) according to any one of claims 1 to 3, further comprising a return spring (40) for returning the pull piston (11) to an initial position, the return spring (40) being a compression spring and being arranged outside the working cylinder (10), the return spring (40) being axially arranged between a support element (43), which is arranged fixed relative to the housing (13), and a counterpressure element (41), which is connected to the pull rod (12), in such a way that the pulling movement of the pull rod (12) causes compression of the return spring (40).

5. The pulling device (1) according to claim 4, wherein the return spring (40) is arranged outside the housing (13).

6. The pulling device (1) according to claim 4 or 5, wherein an axial position of the counterpressure element (41) on the pull rod (12) is adjustable to change a biasing force of the return spring (40).

7. The pulling device (1) according to claim 6,
wherein the pull rod (12) has an external thread, and
wherein the counterpressure element (41) has an internal thread (42) complementary to the external thread,
so that the axial position of the counterpressure element (41) on the pull rod (12) is adjustable by a screw movement.

8. The pulling device (1) according to any one of claims 4 to 7, wherein the return spring (40) is an elastomer spring.

9. The pulling device (1) according to any one of claims 4 to 8, wherein the return spring (40) radially surrounds the pull rod (12).

10. A clamping device (50), comprising:
a one-piece or multi-piece base body (51) forming a clamping device base (52) for connection to a machine part (80);
a pull-actuated clamping element (53) for making a clamping connection with an object to be clamped; and
the pulling device (1) according to claim 1,
wherein the pulling device (1) is detachably arranged in the base body (51), and
wherein the clamping element (53) is detachably connected to the pull rod (12) of the pulling device (1) in such a way that the clamping element (53) is actuable by the pulling movement of the pull rod (12).

11. The clamping device (50) according to claim 10, wherein the pulling device (1) is received in the base body (51) in such a way that it is completely removable from the base body (51) without dismantling the base body (51).

12. The clamping device according to claim 11, comprising a securing element which effects a releasable connection between the base body (51) and the pulling device (1), the pulling device (1) being fixed to the base body (51) in a fixed state of the securing element (60) and being removable from the base body (51) in a released state of the securing element (60).

13. The clamping device according to claim 11 or 12,
wherein the base body (51) has a central axial bore along the longitudinal axis (L), and
wherein the pulling device (1) is received in the central axial bore of the base body (51) in such a way that it is completely removable from the base body (51) without dismantling the base body (51).

14. The clamping device (50) according to any one of claims 11 to 13, wherein the clamping device (50) comprises a return spring (40) formed separately from the pulling device (1) for returning the pull piston (11) of the pulling device (1) to an initial position.

## Revendications

1. Dispositif de traction (1) pour générer un mouvement de traction dans un moyen de serrage, présentant :
un cylindre de travail hydraulique (10) à traction avec un piston de traction (11) déplaçable le long d'un axe longitudinal (L) ;
une tige de traction (12) reliée au piston de traction (11) ;
un cylindre de pompage hydraulique (20) à pression, avec un cylindre de pompage (21) pouvant y coulisser ; et
une connexion fluidique (30) entre le cylindre de pompage (20) et le cylindre de travail (10), de sorte qu'un fluide hydraulique peut être échangé entre le cylindre de pompage (20) et le cylindre de travail (10),
le cylindre de pompage (20) et le cylindre de travail (10) étant disposés coaxialement l'un par rapport à l'autre dans un boîtier (13) du dispositif de traction (1),
**caractérisé en ce qu'**un mouvement du cylindre de pompage (21) dans une direction de pression (D) le long de l'axe longitudinal (L) a pour effet que le fluide hydraulique s'écoule du cylindre de pompage (20) dans le cylindre de travail (10) et y provoque un mouvement de traction du piston de traction (11) et de la tige de traction (12) reliée à celui-ci dans une direction de traction (Z) opposée à la direction de pression (D) le long de l'axe longitudinal (L).

2. Dispositif de traction (1) selon la revendication 1, dans lequel le cylindre de travail (10) est annulaire et entoure radialement le cylindre de pompage (20).

3. Dispositif de traction (1) selon la revendication 2,
dans lequel le boîtier (13) présente un trou central continu le long de l'axe longitudinal (L),
le dispositif de traction (1) comprenant un insert (23) qui est reçu dans le trou central du boîtier (13),
le piston de traction (11) étant de forme annulaire et étant disposé de manière à pouvoir coulisser dans un espace annulaire formant le cylindre de travail (10) entre l'insert (23) et le boîtier (13),
la tige de traction (12) s'étendant vers l'extérieur à travers le trou central du boîtier (13),
le cylindre de pompage (21) étant disposé de manière coulissante dans un trou central de l'insert (23) formant le cylindre de pompage (20), et
le trou central de l'insert (20) étant relié de manière fluidique à l'espace annulaire entre l'insert (23) et le boîtier (13) par une ou plusieurs ouvertures latérales dans l'insert (23).

4. Dispositif de traction (1) selon l'une des revendications 1 à 3, comprenant en outre un ressort de rappel (40) pour ramener le piston de traction (11) dans une position initiale,
le ressort de rappel (40) étant réalisé sous la forme d'un ressort de compression et étant disposé axialement à l'extérieur du cylindre de travail entre un élément d'appui (43) disposé solidairement au boîtier et un élément de contre-pression (41) relié à la tige de traction (12) de telle sorte que le mouvement de traction de la tige de traction (12) provoque une compression du ressort de rappel (40).

5. Dispositif de traction (1) selon la revendication 4, dans lequel le ressort de rappel (40) est disposé à l'extérieur du boîtier (13).

6. Dispositif de traction (1) selon la revendication 4 ou 5, dans lequel une position axiale de l'élément de contre-pression (41) sur la tige de traction (12) est réglable afin de modifier une force de précontrainte du ressort de rappel (40).

7. Dispositif de traction selon la revendication 6,
la tige de traction (12) présentant un filetage extérieur (13), et
l'élément de contre-pression (41) présentant un filetage intérieur (42) complémentaire du filetage extérieur (13),
de sorte que la position axiale de l'élément de contre-pression (41) sur la tige de traction (12) puisse être modifiée par un mouvement de vissage.

8. Dispositif de traction selon l'une des revendications 4 à 7, dans lequel le ressort de rappel (40) est un ressort en élastomère.

9. Dispositif de traction selon l'une des revendications 4 à 8, dans lequel le ressort de rappel (40) entoure radialement la tige de traction (12).

10. Moyens de serrage (50), comprenant :
un corps de base (51) en une ou plusieurs parties, qui forme une base de moyen de serrage (52) pour la liaison avec une partie de machine (80) ;
un élément de serrage (53) actionnable par traction pour établir une liaison de serrage avec un objet (70) à serrer ; et
un dispositif de traction (1) selon l'une quelconque des revendications 1 à 9,
le dispositif de traction (1) étant disposé de manière amovible dans le corps de base (51), et
l'élément de serrage (53) étant relié de manière amovible à la tige de traction (12) du dispositif de traction (1) de telle sorte que l'élément de serrage (53) puisse être actionné par le mouvement de traction de la tige de traction (12).

11. Moyen de serrage (50) selon la revendication 10, dans lequel le dispositif de traction (1) est logé dans le corps de base (51) de telle sorte qu'il puisse être entièrement retiré du corps de base (51) sans démonter le corps de base (51).

12. Moyen de serrage selon la revendication 11, présentant un élément de sécurité (60) qui cause une liaison amovible entre le corps de base (51) et le dispositif de traction (1), le dispositif de traction (1) étant fixé au corps de base (51) dans un état fixé de l'élément de sécurité (60) et pouvant être retiré du corps de base (51) dans un état libre de l'élément de sécurité (60).

13. Moyen de serrage (50) selon la revendication 11 ou 12,
dans lequel le corps de base (51) comporte un trou axial central le long de l'axe longitudinal (L), et
dans lequel le dispositif de traction (1) est reçu dans le trou axial central du corps de base (51) de telle sorte qu'il puisse être entièrement retiré du corps de base (51) sans démonter le corps de base (51).

14. Moyen de serrage (50) selon l'une des revendications 11 à 13, le moyen de serrage (50) comprenant un ressort de rappel réalisé séparément du dispositif de traction (1), pour ramener le piston de traction (11) du dispositif de traction (1) dans une position initiale.
